# EUROPEAN PATENT APPLICATION

(11) **EP 2 806 185 A1**
(43) Date of publication of application: **26.11.2014**
(21) Application number: 14169712.8
(22) Date of filing: 23.05.2014
(51) Int. Cl.: F16F 15/02, F16F 7/01

(54) **Machine part containing an effective filling of a mineral composite and a method to manufacture it**

(30) Priority: 23.05.2013 CZ 20130383
(71) Applicant: SOMA spol. s r.o., 56301 Lanskroun (CZ)
(72) Inventor: FILIP, Tomás, 56301 Lanskroun (CZ); Mirejovski, Jirí, 56301 Lanskroun (CZ)
(74) Representative: Langrova, Irena

(57) **Abstract**

The machine part (1) is self-supporting and is made of iron and/or of non-ferrous metals and/or of the cast iron. At least one portion of the surface of the part (1) is formed into a technological surface (3) the roughness of which is R_{z} = 12.5 to 200.

On the technological surface (3) is applied the filling (4) of the mineral composite which is composed of
- hardenable epoxide resin free from solvents constituting 10 ± 1 volume percentage max.,
- silicon stone constituting 90 ± 1 volume percentage min. with granularity of 4 to 16 mm. The filling (4) is as thermally expandable as the material of the part (1) with the tolerance of ± 70 per cent and its thermal resistivity corresponds to operating temperature of the part (1) at least,
the corrosive resistance of the filling corresponds to the operating corrosive loading of the part (1),
the strength resistance of the filling (4) meets the stress load which is caused by the deformation of the part (1) with the operating load at least
and the linear shrinking size of the filling (4) is 0.4 mm/m max. after hardening. In the first manufacture step a suitable type of the mineral-composite filling (4) of mentioned composition and properties is selected. Further, the part (1) is made and the surface-to-be-filled is prepared geometrically. In the second step the surface-to-be-filled is formed into the technological surface (3). In the third step the filling (4) is applied on the technological surface (3) and the filling (4) is hardened.

## Description

### Field of Engineering

The proposed invention falls under the field of mechanical engineering, in concrete terms among structural elements of machinery appliances modified to damp vibrations.

### State of the Prior Art

Dynamic and thermo-mechanic properties of conventional machine parts are limited by values of physical properties of materials thereof. The conventional solution means that one from the field of usually accessible structural materials as all iron or non-ferrous metals, cast iron, plastics etc. To improve dynamic and thermo-mechanical properties expressively, unconventional materials must be used - e.g. carbon-fibre or mineral composites of a certain type.

These solutions are always realized so that a carrying element is the above mentioned nonconventional material in which original-conventional-material elements are inserted which must be finish- machined subsequently to reach requested geometric and dimensional accuracy. In practice, this is done so that the whole part is cast of unconventional material and the conventional-material elements have the form of locally dislocated assembling elements. This is because the conventional materials can be machined precisely more easily than the unconventional ones. However, these complex solutions with prevailing unconventional materials are very expensive compared to those ones of conventional materials but bring better effect of the order in specific cases.

If there is a need to improve the dynamic and thermo-mechanical properties by several tens of per cent only, these solutions are very expensive as for technologic preparation and price of unconventional materials and are robust needlessly therefore. The purpose of the present invention is to provide such machine part structure which has better dynamic and thermo-mechanical properties than that one of conventional materials, i.e. for a fraction of price as compared with the machine parts with prevailing unconventional materials.

### Substance of the Invention

The substance of the invention consists in creating a machine part structure containing an effective filling of a mineral composite and in a method to manufacture it. The effective filling reduces expressively oscillations and vibrations of the machine part in precise machinery applications which helps to achieve higher accuracy during performing thereof. The part is self-supporting and is made of iron and/or non-ferrous metals and/or of cast iron. The part is a casting and/or forging and/or weldment and/or a set of machine components connected with a dismountable or a non-dismountable joint. The self-supportability of the part reduces the final price because the filling is not considered to be a supporting element and due to it its local application is simpler and cheaper therefore. At least one portion of the part surface is formed into the technological surface. The roughness of the technological surface R_{Z} is 12.5 to 200 and is free from mechanical impurities or/and grease and/or moisture.

On the technological surface is applied the filling of the mineral composite being composed of
- hardenable epoxide resin, devoid of solvents, constituting 10 ± 1 volume percentage max.,
- silicon stone constituting 90 ± 1 volume percentage min. with granularity of 4 to 16 mm.

With regard to the part material, the concrete filling composition is chosen so that:
- the filling is as thermally expandable as the part material with the tolerance of ±70 per cent;
- the filling thermal resistivity conforms to the operating temperature of the part at least;
- the filling corrosive resistivity conforms to operating corrosion load of the part at least;
- the filling strength resistance meets the strength load at least caused by deformation of the part material with operating load;
- the linear shrinking size of the filling is 0.4 mm/m max.

In an advantageous embodiment the part has the shape of a hollow polygon equipped with one element at least to be clamped into a machine-tool. In that case the polygon is provided, at least from one side with one element at least to clamp a workpiece and/or a clamping jig. However, it is advantageous if there are more elements for clamping. Thanks to it, more workpieces can be clamped together into the working space of a machine-tool due to which subsidiary times are reduced and the parts can be machined from more sides without reclamping. The polygon cavity is filled up with the filling. This structural realization can be utilized as a clamping system of a multiaxial machine-tool. Owing to its structure, the vibration, during machining with a machine-tool, is reduced due to which higher accuracy is achieved.

In further advantageous embodiment the part is shaped as a forming or raster cylinder of a flexo printing press. The cylinder is equipped with the seizing spigots on its ends. The cylinder cavity is filled up with the filing and provided with the through-hole in the cylinder rotation axis. The through-hole is interconnected with radial holes on the cylinder surface. The through-hole and the radial holes can be utilized for compressed air to take off the model of the cylinder where, with air pressure raising, the model is extended in the holes and pulled down more easily. The air is led into the through-hole through an orifice in the putting spigots. The described structure of the forming or raster cylinder reduces its vibrations expressively with the flexo printing press operating. Generally, it holds that the smaller the cylinder diameter and the longer the cylinder is the more is the cylinder susceptible to vibrations. The above mentioned filling can be applied in forming and raster cylinders of all used diameters and lengths. To damp the vibrations even more, the transit axial holes, on the same pitch circle in the cylinder wall, can be used which are filled up with the filling. To ensure perfect dynamic balance, the material layer of the density of 7850 kg/m³ can be used variantly on the boundary between the filling and the seizing spigots. This material can be machined by chippy methods. Such material is some kind of structural steel especially. Before placing the putting spigots, this material can be machined locally to ensure the dynamic balance of the whole cylinder.

To facilitate the production of above mentioned forming or raster cylinder of a flexo printing press, it is advantageous if the boundary between the filling and the through-hole consists of a technologic boundary formed like a tube of corrosive-resistant steel. The outer surface of the technologic boundary is formed into the technological surface.

In another advantageous realization the part is shaped like a ribbed casting a sidewall of a machine for packaging-materials treatment. In such case the filling is located in unloaded places between the ribs. The mentioned structure prevents the sidewall vibrations which cannot be transferred into the machine frame therefore and their negative influence upon the accuracy of the production process, carried out by the machine, is suppressed.

The method to produce the machine part, containing the effective mineral-composite filling, consists in that in the first step a suitable type of the mineral-composite filling is selected which is composed of:
- hardenable epoxide resin constituting the portion of 10 ± 1 volume percentage max.;
- silicon stone constituting the portion of 90 ± 1 volume percentage min. of the granularity of 4 to 16 mm.

The concrete filling composition is chosen in order to achieve requested features in combination with the part material. Further, the semi-product of the part is made including the geometric preparation of the surface-to-be-filled. The geometric preparation consists in the part machining in compliance with the drawing documentation. The part semi-product is equipped with finishing allowances.

In the second step the surface-to-be-filled is formed into the technological surface. This means to clean the technological surface and to achieve requested roughness R_{Z} in the range of 12.5 to 200 and to degrease and dry it especially.

In the third step the filling is applied on the technological surface and hardened. In a variant solution, depending on the shape and purpose of the part, the dimensionally and/or geometrically accurate surfaces of the part can be machined after hardening the filling. This is advantageous because stress and movement of the part material occur during hardening. After hardening neither stress nor movement occur and it is purposeful therefore to machine the dimensionally and/or geometrically accurate part surfaces afterwards.

In an advantageous realization the last step means to finish the part surface and the filling except for possibly machined dimensionally and/or geometrically accurate surfaces.

In another variant solution, these two steps can be carried out in reverse sequence. Therefore, after hardening the filling, the surface of the part and the filling can be finished. In the end, the dimensionally and/or geometrically accurate surfaces of the part are finished.

However, in both cases it holds that the kind of surface finishing is chosen with regard on the part material and used filling. Essentially, the part and filling materials must be inert chemically or/and thermally towards the surface finishing. Suitable surface finishing consists in varnishing at application temperature up to 60°C especially.

In manufacturing the part, shaped like a hollow forming or raster cylinder of the flexo printing press, the technologic boundary, shaped like a tube of corrosive-resistant steel, is located axially inside the cylinder to advantage. The outer tube surface is formed into the technological surface. The tube is equipped with orifices in the radial-holes places. In the following step these orifices are interconnected with the radial holes by means of technologic blinding plugs. In subsequent step the filling is placed into the cavity between the inner cylinder wall and the technologic boundary and hardened. In one of the following steps the technologic blinding plugs are removed by drilling off especially. With this kind of manufacturing the forming or raster cylinder of a flexo printing press, the technologic boundary acts as a mould for the filling. The technologic blinding plugs consist of a material which is softer than that of the filling. Thanks to it, they can be removed easily due to which the requested interconnections of the radial holes with the transit hole originate without need to machine the hard material of the filling.

With creating such structure, the machine part is gained which has got excellent dynamic and thermo-mechanic properties owing to the effective filling. In addition, compared to the carbon steel, the filling has low thermal conductivity and reduces the structure sensitivity to local temperature changes. Furthermore, it has lower density than the carbon steel so that the attached structural elements, on which the machine part is fastened in the machine, need not be so sturdy in some cases. In comparison to machine parts, without applied damping measures, the described invention provides expressively better results with only slightly elevated price. With approximate price enhancement up to 10 per cent, the effective filling provides higher temperature stability, by 70 per cent approximately (less sensitivity to temperature gradients) and higher damping capabilities, by 30 - 80 per cent approximately, according to the application, in comparison to the solution with conventional material.

The proposed invention brings an opposite principle than that of the machine parts utilized in the hitherto state_of engineering. It follows from the substance of the self-supporting machine part, solved as for the rigidity, with using the conventional material in the basic structure, that it is concentrated to improve the mentioned dynamic, thermo-mechanic and anticorrosion properties. These properties can be regarded as "protecting" because they protect the basic structure against dynamic influences, especially vibrations, and also augment the thermal stability and corrosion resistance thereof. Satisfactory loading capacity of the basic framework of the machine part creates a mould for the effective filling essentially which closes or does not close the filling according to the way and needs of the application. Due to it, the filling application costs are reduced even in the beginning in comparison to the complex unconventional solution.

### Explanation of the Drawings

The exemplary embodiment of the proposed solution is described with reference to the drawings where there is on
Fig. 1 - general diagram of the machine part containing the effective mineral composite-filling;
Fig 2 - a machine part in the form of a clamping system of a multi-axial machine-tool equipped with elements to clamp the workpiece;
Fig. 3 - basic realization of the machine part in the shape of a cylinder of a flexo printing press;
Fig. 4 - a semi-product of a cylinder of a flexo printing press with represented axial holes;
Fig. 5 - a machine part, formed as a cylinder of a flexo printing press, with balancing elements and a technologic boundary (here after having drilled technologic blinding plugs);
Fig. 6 - a machine part in the shape of a cylinder of a flexo printing press with a technologic boundary (here after having drilled technologic blinding plugs);
Fig. 7 - a machine part in the shape of sidewall of a machine.

### Examples on the Invention Embodiment

### Example no. 1

In compliance with the proposed invention the machine part 1 has been manufactured containing an effective filling of a mineral composite. The part 1 is self-supporting and is made of unalloyed constructional fine-grained steel 11 523. In this case the part 1 consists of a set of machine components 2 connected with dismountable joints. The part 1 is hollow-ashlar-shaped and equipped with an element 5 to be seized in a machine-tool. From the outer side the part 1 is equipped with four elements 6 for workpiece clamping.

The inner surface of the cavity of the part 1 is formed into the shape of the technological surface 3. In this case, its roughness is R_{Z} = 25 and it is free from mechanical impurities, grease and moisture.

On the technological surface 3 the mineral-composite filling 4 is applied and composed of
- hardenable epoxide resin devoid of solvents, constituting a portion of 7 ± 1 volume percentage,
- silicon stone constituting a portion of 93 ± 1 volume percentage with granularity of 12 mm.

The filling 4 is as expandable thermally as the material of the part 1 with the tolerance of ± 70 per cent. In this case, the thermal resistivity of the filling 4 exceeds the operating temperature of the part 1. Corrosion resistance of the filling 4 exceeds the operating corrosion load of the part 1. The strength resistance of the filling 4 exceeds the strength load caused by material deformation of the part 1 due to operating load. In this case the linear shrinking size of the filling 4 equals 0.3 mm/m.

The machine part 1 has been made so that a suitable type of the mineral-composite filling 4 has been selected in the first step. Owing to the filling composition, required features have been achieved in combination with the material of the part 1. Further, a semi-product of the part 1 has been manufactured including the geometric preparation of the surface being filled up. The geometric preparation of the filled up surface consisted in machining the part according to the drawing documentation.

In the second step, the surface being filled up has been formed into the shape of the technological surface 3. The preparation of the technological surface consisted in the technological surface cleaning, achieving the requested roughness R_{Z}, degreasing and drying. In the third step, the filling 4 has been applied to the technological surface 3 and the filling 4 has been hardened. After hardening the filling 4, the geometrically precise surfaces of the part 1 have been machined.

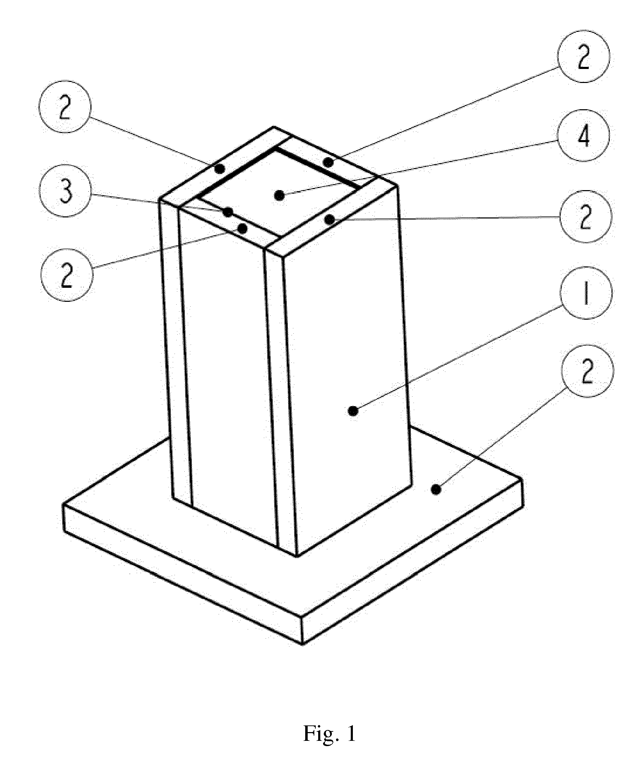

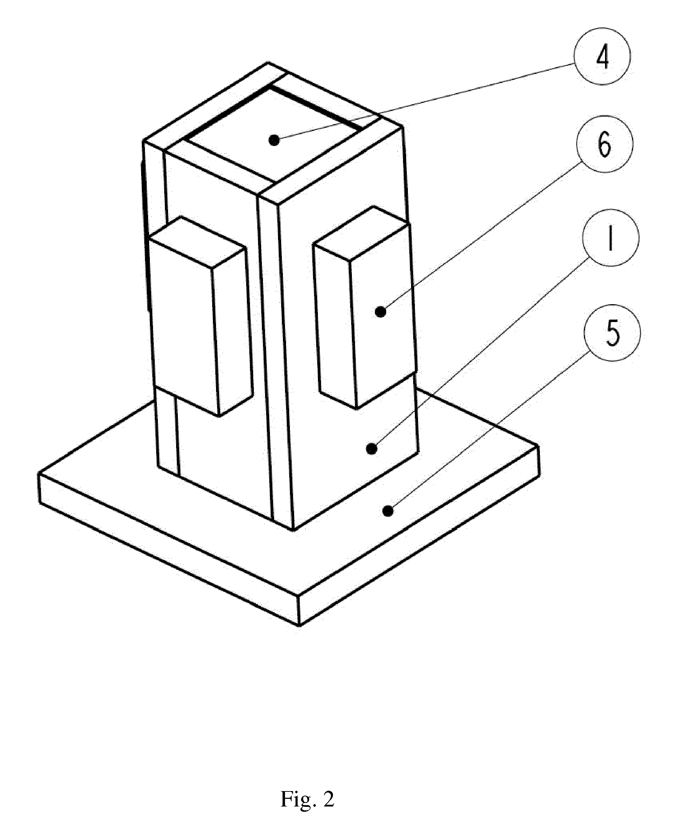

The exemplary realization is obvious on the Figs 1 and 2.

### Example no. 2

According to the proposed invention two self-supporting machine parts 1 have been manufactured containing the effective mineral-composite filling.

The first part 1 is shaped like a hollow forming cylinder of a flexo printing press, said cylinder being equipped with seizing spigots 10. The cylinder cavity is filled up with the filling 4 and equipped with the through-hole 7 in the cylinder axis. The through-hole 7 is interconnected with radial holes 8 on the cylinder surface. The seizing spigots 10 are equipped with a non-sketched hole interconnecting the through-hole 7 with the outer surface of the spigots 10. In the cylinder wall there are eight axial transit holes 9 on the same pitch circle. The holes 9 are filled up with the filling 4.

Here, the boundary between the filling 4 and the through-hole 7 consists of the technologic boundary 12, formed like a tube of stainless steel. The outer surface of the technologic boundary 12 is formed into the technological surface 3. The silicon stone in the filling 4 has the granularity of 4 mm. Other parameters of the filling 4 and the technological surface 3 are defined in the same way as in the Example 1.

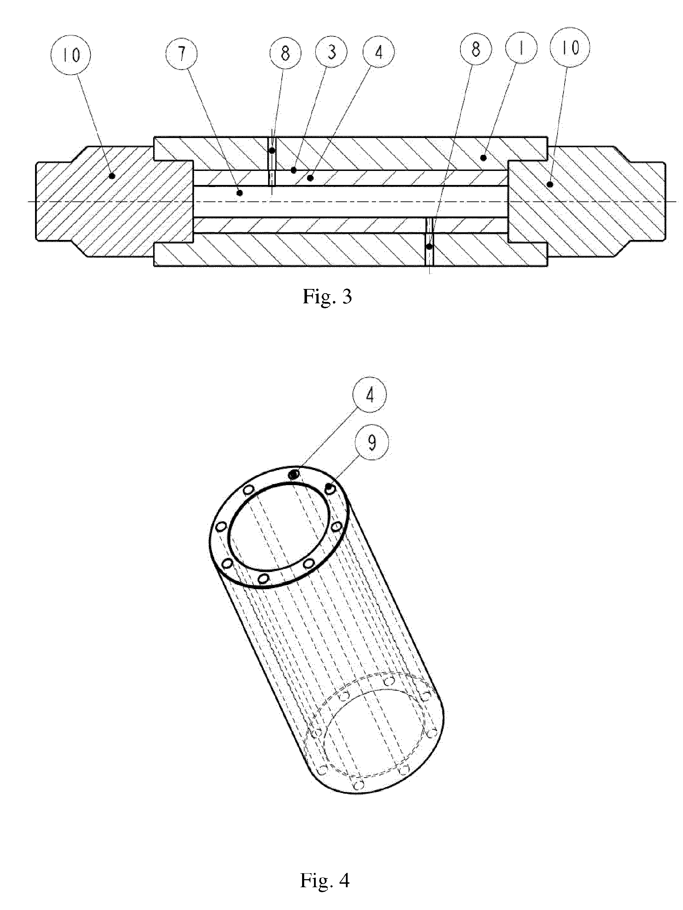

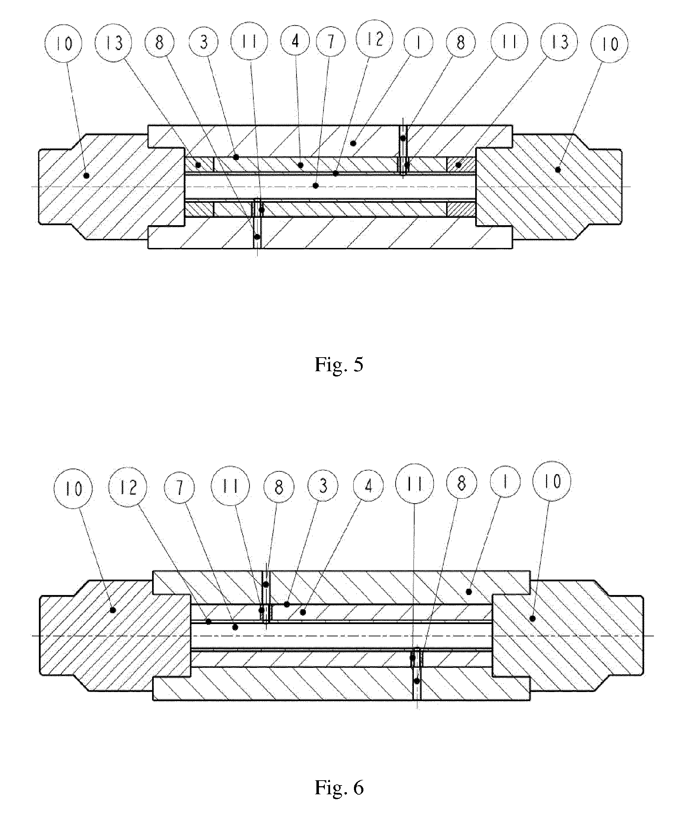

The exemplary embodiment is obvious on the Figs 4 and 6.

The second part 1 is raster-cylinder shaped and differs from the first part 1 in that the material layer 13, having density of 7850 kg/m³ and being workable by chippy machining methods, is located on the boundary between the filling 4 and the seizing spigots 10. In this case this material is the constructional steel.

The exemplary embodiment is obvious on the Figs 4 and 5.

### Example no. 3

In compliance with the proposed invention, the machine part 1 has been manufactured containing the effective mineral-composite filling. The part 1 is self-supporting and has the shape of a ribbed casting a sidewall of a packing-materials-processing machine. The filling 4 is located in relaxed places between the ribs. The filling 4 and the 3 are defined in the same way as in the Example 1.

As the last step in manufacturing the part 1, the surfaces of the part 1 and the filling 4 were treated. The surface treatment was not applied on machined dimensionally and geometrically precise surfaces of the part 1. In this case the surface treatment consists in varnishing and the material of the part 1 and of the filling 4 is chemically and thermally inert towards the surface treatment.

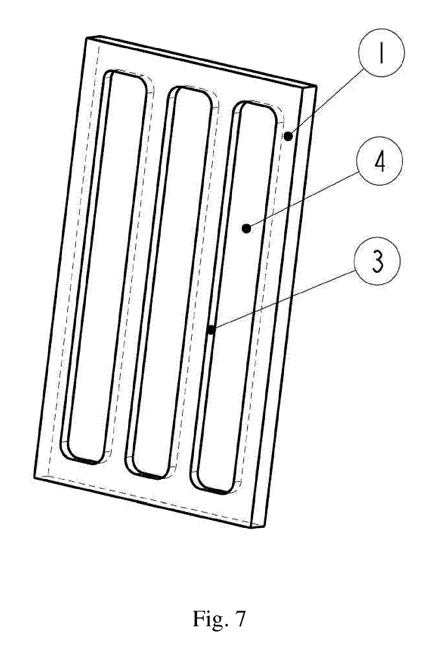

The exemplary realization is obvious on the Fig 7.

### List of Reference Symbols

- 1: - part
- 2: - component
- 3: - technological surface
- 4: - filling
- 5: - element to be seized in a machine-tool
- 6: - element to clamp a workpiece
- 7: - through-hole
- 8: - radial hole
- 9: - axial hole
- 10: - spigot
- 11: - technologic blinding plug
- 12: - technologic boundary
- 13: - material layer

## Claims

1. Machine part containing an effective filling of mineral composite, **characterized in that** the part (1) is self-supporting and made of iron and/or of non-ferrous metals and/or of cast-iron, said part (1) being a casting and/or forging and/or welded piece and/or a set of machine components (2) interconnected with a dismountable or non-dismountable joint, and at least one portion of the part (1) is formed into a technological surface (3), the roughness of which R_{Z} being 12.5 to 200, and is free from mechanical impurities and/or from grease and/or of moisture,
and on the technological surface (3) the filling (4) the mineral composite is applied being composed of:
- hardenable epoxide resin free from solvents constituting the portion of 10 ± 1 volume percentage max.,
- silicon stone constituting the portion of 90 ± 1 volume percentage min. with granularity of 4 to 16 mm,
said filling (4) having equal thermal expansibility as the material of said part (1) with the tolerance of ± 70 per cent,
the thermal resistivity of said filling (4) corresponding to operating temperature of said part (1) at least,
the corrosion resistance of said filling (4) corresponding to operating corrosion load of said part (1),
the strength resistivity of said filling (4) complying with the strength load at least being caused by deformation of said part (1) under operating load,
and the linear shrinking size of said filling (4) being 0.4 mm/m max. after hardening.

2. Machine part containing the effective mineral-composite filling according to the Claim 1, **characterized in that** the part (1) has a shape of a polygon equipped with one element (5) at least for clamping in a machine-tool
and further, at least from one outer side, said polygon is equipped with one element (6) at least to clamp a workpiece and/or a fixture to clamp a workpiece,
with the polygon cavity being filled with said filling (4).

3. Machine part containing the effective mineral-composite filling according to the Claim 1, **characterized in that** the part (1) has the shape of a hollow forming or raster cylinder of a flexo printing press, with that cylinder being equipped with spigots (10) forming a non-dismountable joint with the cylinders,
with the cylinder cavity being filled up with said filling (4) and equipped with a through-hole (7) in the axis of rotation, with said through-hole being interconnected with radial holes (8) in the cylinder surface.

4. Machine part containing the effective mineral-composite filling according to the Claim 3, **characterized in that** the boundary between the filling (4) and the through-hole (7) consists of a technologic boundary (12) in the shape of a tube of stainless steel, with the outer surface of said technological boundary (12) being formed into the technological surface (3).

5. Machine part containing the effective mineral-composite filling according to the Claim 3 or 4, **characterized in that** in the wall of the cylinder there are transit axial holes (9) located on the same pitch circle and are filled up with the filling (4).

6. Machine part containing the effective filling of a mineral composite according to the Claim 3 to 5, **characterized in that**
on the boundary between the filling (4) and the seizing spigots (10) there is located a layer (13) of the material of the density of 7850 kg/m³ at least which is workable by chippy machining methods.

7. Machine part containing the effective mineral-composite filling according to the Claim 1, **characterized in that**
the part (1) has the shape of a ribbed casting sidewall of the machine for packaging materials processing and the filling (4) is located in released places between the ribs.

8. A method to manufacture the machine part containing the effective mineral-composite filling according to Claim 1, **characterized in that** in the first step a suitable type of the mineral-composite filling (4) is selected which is composed of:
- hardenable epoxide resin constituting the portion of 10 ± 1 volume percentage max.,
- silicon stone constituting the portion of 90 ± 1 volume percentage min. and having granularity of 4 to 16 mm,
in order to achieve requested features combined with the material of the part (1),
and further the semi-product of the part (1) is manufactured including the geometric preparation of the surface-to-be-filled,
in the second step the surface-to-be-filled is formed into the technological surface (3), the surface is cleaned technologically with creating required roughness R_{Z} in the range of 12.5 to 200 and with the surface is degreased and dried especially,
and in the third step the filling (4) is applied to the technological surface (3) and the filling (4) is hardened.

9. The method to manufacture the machine part containing the effective mineral-composite filling according to the Claim 8, **characterized in that** after hardening of the filling (4), the dimensionally and/or geometrically precise surfaces of the part (1) are machined.

10. The method to manufacture the machine part containing the effective mineral-composite filling according to the Claim 8 or 9, **characterized in that** in the last step the surfaces of the part (1) and of the filling (4) are treated with the exception of possibly dimensionally and/or geometrically machined precise surfaces of the part (1),
said material of the part (1) and of the filling (4) being chemically and/or thermally inert to the surface treatment.

11. The method to manufacture the machine part containing the effective mineral-composite filling according to the Claim 8, **characterized in that** after hardening of the filling (4), the part (1) and the filling (4) are surface-treated, with the materials of said part (1) and of said filling (4) being chemically and/or thermally inert to the surface treatment and finally the geometrically and/or geometrically precise surfaces of the part (1) are machined.

12. The method to manufacture the machine part containing the effective mineral-composite filling according to any of the Claims 8 to 11, **characterized in that** with manufacturing the part (1) in the shape of a forming or raster cylinder of a flexo printing press the technologic boundary (12), in the form of a tube of corrosive-resistant steel, is located coaxially, with the surface of said tube being formed into the technological surface (3) and said tube being equipped with orifices in the places of the radial holes (8),
and in following step these orifices being interconnected with radial holes (8) by means of technological blinding plugs (11),
and in following step the filling (4) is applied into the cavity between the inner cylinder wall and the technological boundary (12) and the filling (4) is hardened,
and in one of following steps the technologic blinding plugs (11) are removed, especially by drilling off.
